# EUROPÄISCHE PATENTSCHRIFT

(11) **EP 3 184 300 B1**
(45) Veröffentlichungstag und Bekanntmachung des Hinweises auf die Patenterteilung: **31.07.2019**
(21) Anmeldenummer: 15201558.2
(22) Anmeldetag: 21.12.2015
(51) Int. Cl.: B32B 27/08, B32B 27/16, B32B 27/30, B32B 27/32, B32B 27/36

(54) **OBERFLÄCHENSCHICHTVERBUND, VERFAHREN ZUM HERSTELLEN EINES OBERFLÄCHENSCHICHTVERBUNDS SOWIE VERFAHREN ZUR HERSTELLUNG EINER MIT EINEM DEKOR UND/ODER EINER WERBUNG VERSEHENEN PLATTE**
SURFACE LAYER COMPOSITE, METHOD FOR PRODUCING A SURFACE LAYER COMPOSITE AND METHOD FOR THE PREPARATION OF A PLATE WITH A DECORATIVE PANEL AND/OR ADVERTISEMENT
COMPOSITE DE COUCHE DE SURFACE, PROCEDE DE FABRICATION D'UN COMPOSITE DE COUCHE DE SURFACE ET PROCEDE DE FABRICATION D'UNE PLAQUE POURVUE D'UN DECOR ET/OU D'UNE PUBLICITE

(43) Veröffentlichungstag der Anmeldung: 28.06.2017
(73) Patentinhaber: Taubert, Wilhelm, 46569 Hünxe (DE)
(72) Erfinder: Taubert, Wilhelm, 46569 Hünxe (DE)
(74) Vertreter: Dr. Stark & Partner Patentanwälte mbB

(56) Entgegenhaltungen:
- EP-A2- 0 578 957
- US-B1- 6 218 004

## Beschreibung

**Oberflächenschichtverbund zum späteren Aufbringen auf eine Oberseite einer Platte, Verfahren zum Herstellen eines Oberflächenschichtverbunds zum späteren Aufbringen auf eine Oberseite einer Platte sowie Verfahren zur Herstellung einer mit einem Dekor und/oder einer Werbung versehenen Platte**

Die Erfindung betrifft einen Oberflächenschichtverbund zum späteren Aufbringen auf eine Oberseite einer Platte, wobei der Oberflächenschichtverbund zum einen eine strahlengehärtete und transparente Nutzschicht mit einer Nutzschichtoberseite und einer Nutzschichtunterseite und zum anderen eine Zusatzschicht mit einer Zusatzschichtoberseite und einer Zusatzschichtunterseite umfasst, die unterhalb der Nutzschicht vorgesehen ist, wobei die Zusatzschicht vollflächig mit der Nutzschichtunterseite verbunden ist.

Platten mit strahlengehärteten Oberflächenschichtverbunden werden seit vielen Jahren in der Herstellung von dekorativen Schichtstoffplatten eingesetzt. Sie weisen eine hohe Druckqualität und Brillanz des Dekors, eine hohe Witterungsbeständigkeit, eine hohe Kratzbeständigkeit, eine hohe Chemikalienbeständigkeit und eine hohe Lichtechtheit auf. Es sind Oberflächenschichtverbunde zum späteren Aufbringen auf eine Oberseite einer Platte bekannt, wobei der Oberflächenschichtverbund zum einen eine strahlengehärtete und transparente Nutzschicht mit einer Nutzschichtoberseite und einer Nutzschichtunterseite und zum anderen eine Zusatzschicht mit einer Zusatzschichtoberseite und einer Zusatzschichtunterseite umfasst, die unterhalb der Nutzschicht vorgesehen ist, wobei die Zusatzschicht vollflächig mit der Nutzschichtunterseite verbunden ist und wobei es sich bei der Zusatzschicht um ein Papier mit einem Dekor handelt. Das Papier kann - sofern erwünscht - auch behandelt, d. h. harzgetränkt, sein. Dieser Oberflächenschichtverbund kann dann später auf eine Platte aufgebracht werden.

Strahlengehärtete Oberflächen sind fertige Produkte, die nicht mehr beispielsweise in einer Presse unter Druck und Temperatur sowie unter Einfluss weiterer Substanzen, wie Melamin- oder Phenolharzen, aushärten müssen. Daher haben sie den großen Vorteil, dass sie zeitlich fast unbegrenzt lagerfähig sind. Die strahlengehärteten Oberflächenschichtverbunde werden als Rollenware oder als Blattware geliefert, wobei die gewünschten Eigenschaften festgelegt sind. Aus der EP 0 578 957 A2 ist ein Verfahren zum Auftragen einer dekorativen Schicht auf ein Trägermaterial bekannt. Die US 6,218,004 B1 beschreibt ein acrylatpolymerbeschichtetes Plattenmaterial sowie ein Verfahren zur Herstellung.

Traditionelle harzgetränkte Papiere verlieren jedoch ihre Eigenschaften nach ca. 6 - 9 Wochen und müssen dann entsorgt werden. Das führt zu hohen Verlusten und großen logistischen Anforderungen. Als nachteilig wird außerdem angesehen, dass - sofern wie beispielsweise bei der Herstellung von Paneelen - unterschiedliche Dekore erwünscht sind, der Hersteller Oberflächenschichtverbunde mit den unterschiedlichen Dekoren in Mindestmengen bevorraten muss. Sonderdekore sind nur mit einem hohen Aufwand zu realisieren.

Die Aufgabe der Erfindung besteht darin, die vorgenannten Nachteile zu beseitigen und einen Oberflächenschichtverbund anzugeben, der einfach herstellbar und zum Aufbringen auf Platten unterschiedlicher Dekor verwendbar ist.

Diese Aufgabe wird dadurch gelöst, dass die Zusatzschicht als transparente Kunststofffolie ausgebildet ist und wobei die Oberfläche der Zusatzschichtoberseite und/oder die Oberfläche der Zusatzschichtunterseite zur Erhöhung ihrer Oberflächenenergie vor dem Miteinanderverbinden mit der Nutzschicht behandelt ist(sind). Der erfindungsgemäße Oberflächenschichtverbund kombiniert die Vorteile einer strahlengehärteten Oberfläche mit den Vorteilen einer universellen frei wählbaren Dekor- und Farbgestaltung.

Aufgrund der zumindest in einem später auf einer Platte aufgebrachten Zustand transparenten Ausgestaltung des Oberflächenverbundes muss ein Hersteller nur noch einen einzigen Oberflächenschichtverbund bevorraten, da dieser Oberflächenschichtenverbund für alle Platten beliebigen Dekors verwendet werden kann. Unter transparent wird eine solche Ausgestaltung verstanden, dass ein Dekor, welches auf einer mit dem Oberflächenschichtverbund später beschichteten Platte aufgebracht ist, durch den Oberflächenschichtverbund zumindest hindurchscheint. Das "Hindurchscheinen" kann derart sein, dass primär nur gröbere Umrisse und Farben erkennbar sind. Es ist aber auch durchaus möglich, dass der aus den Schichten bestehende Oberflächenschichtverbund als Ganzes hochtransparent ist. Dann sind alle Einzelheiten eines Dekors mehr oder weniger brillant durch den Oberflächenschichtverbund hindurch erkennbar.

Die Oberfläche der Zusatzschichtoberseite und/oder die Oberfläche der Zusatzschichtunterseite kann(können) mechanisch, beispielsweise durch Sandstrahlen oder Kugelstrahlen, behandelt sein. Entsprechende mechanische Verfahren bieten sich insbesondere dann an, wenn insbesondere nur eine der beiden Oberflächen behandelt werden soll oder beide Oberflächen unterschiedlich behandelt werden sollen, so dass die betreffende Oberfläche eine gute Verbindung zu der angrenzenden Schicht haben soll und damit eine dauerhafte Verbindung zu dieser angrenzenden Schicht eingeht. Bei einer behandelten Zusatzschichtoberseite ist eine gute Haftung zu der Nutzschicht gegeben. Durch eine Behandlung der Zusatzschichtunterseite ist eine gute Verbindung zu einer darunter befindlichen Schicht, die beispielsweise Klebharze, wie Melamin oder Phenolharze, aufweisen kann, gegeben.

Die Platte kann beispielsweise als Paneel ausgebildet sein. Es sind aber auch andere Plattenausgestaltungen, wie beispielsweise Platten zur Verwendung im Fassadenbereich, im Laborbereich, im Sanitärbereich, als Trennwände, als Schilder oder als Tafeln oder Werbetafeln für den Außenbereich denkbar, die mit dem erfindungsgemäßen Oberflächenschichtverbund leicht beschichtbar sind.

Die Erfindung erlaubt insoweit eine einfache und kostengünstige Herstellung beispielsweise von Werbetafeln für den Außenbereich. So kann eine Werbetafel mit dem gewünschten Design auf eine übliche Weise bedruckt werden. Anschließend wird der erfindungsgemäße Oberflächenschichtverbund beispielsweise auf die mit dem Design versehene Oberseite aufgebracht. Damit wird ein guter Witterungsschutz sowie eine Oberfläche mit einer hohen Kratzbeständigkeit erzielt.

Die strahlengehärtete, vorzugsweise transparente, Nutzschicht besteht aus einer strahlengehärteten strahlenhärtbaren Beschichtungsmasse. Die Beschichtungsmasse kann beispielsweise Lack, Kleber, Leim, Kunstharze, eine oder mehrere durch Strahlung polymerisierbare Komponenten, die aus der Gruppe der ungesättigten Acrylate und Methacrylate ausgewählt sind, oder eine Mischung aus den vorstehend genannten Stoffen oder einem Teil davon enthalten. Durch die strahlengehärtete Nutzschicht wird ein möglichst abriebfester Überzug erzielt. Ein abriebfester Überzug ist insbesondere bei Verwendung des Oberflächenschichtverbundes für Fußbodenpaneele von Relevanz. Im Übrigen sind strahlengehärtete Oberflächen hoch lichtecht, kratzbeständig, farbecht und auch chemikalienbeständig. Zusätzlich lassen sich unterschiedliche Glanzgrade und auch unterschiedliche Strukturen in der jeweiligen Oberfläche erzielen.

Zum Aushärten der strahlengehärteten strahlenhärtbaren Beschichtungsmasse wird eine energiereiche Strahlung, insbesondere UV-Strahlung, Röntgenstrahlung, Laserstrahlung und/oder Elektronenstrahlung (ESH) unter Aufrechterhaltung einer bestimmten Temperatur bei Normaldruck verwendet. Durch die Strahlung erfolgt eine Vernetzung und/oder Polymerisierung, so dass die strahlengehärtete Nutzschicht die gewünschte Härte erreicht. Zu ihrer Herstellung werden beispielsweise hochwertige Acrylat- und Methacrylatharze eingesetzt, die unter der Einwirkung von Elektronenstrahlen oder UV-Strahlen zu annähernd 100 % vernetzen und dadurch keine freien Doppelbindungen für spätere Alterungsreaktionen mehr aufweisen. Die Oberflächen sind hoch lichtecht, kratzbeständig, farbecht und chemikalienbeständig. Es lassen sich unabhängig von Pressblechen alle Glanzgrade und eine sehr große Vielfalt von Strukturen realisieren.

Die strahlengehärtete Nutzschicht kann beliebige Glanzgrade oder Strukturen, wie z. B. eine Mikrostruktur zur Erzielung bestimmter Oberflächeneffekte, wie Antigraffiti ober Antifingerprint, aufweisen. Auch kann die Nutzschicht eingelagerte Duftstoffe enthalten oder mit antibakteriell wirkenden Substanzen ausgerüstet sein. Auch eine Ausrüstung mit feuerhemmenden Substanzen ist möglich. Ferner können optische Aufheller enthalten sein, die dem Untergrund eine erhöhte Brillanz verleihen. Selbstverständlich können in der Nutzschicht auch reflektierende Partikel enthalten sein, die eine gesteigerte Lichtbrechung und eigene optische Effekte verursachen.

Bei einer bevorzugten Ausführungsform kann(können) die Oberfläche der Zusatzschichtoberseite und/oder die Oberfläche der Zusatzschichtunterseite zur Erhöhung ihrer Oberflächenenergie vor dem Miteinanderverbinden mit der Nutzschicht chemisch behandelt, vorzugsweise geätzt, worden sein. Sofern sowohl die Zusatzschichtoberseite als auch die Zusatzschichtunterseite geätzt sind, ist zum einen eine gute Haftung zu der darüberliegenden Nutzschicht sowie zum anderen ein gute Haftung zu einer eventuell darunter angeordneten Schicht gegeben.

Dabei kann die Kunststofffolie als Polyesterfolie, als Polyethylenterephthalat-Folie (PET), als Polypropylen-Folie (PP), als Polyethylen-Folie (PE) oder der gleichen, ausgebildet sein.

Dabei kann die Nutzschichtoberseite mit einer die Nutzschicht zumindest während der Strahlenhärtung vor der Einwirkung von Sauerstoff schützenden, vorzugsweise transparenten, Abdeckschicht abgedeckt sein. Auf diese Weise wird die Nutzschichtoberseite während der Strahlenhärtung vor der Einwirkung von Luftsauerstoff abgedeckt, so dass die Bestrahlung mit einer energiereichen Strahlung in einer inertgasfreien Atmosphäre durchgeführt werden kann. Im Übrigen wird ein Druck in Höhe des Atmosphärendruckes eingestellt, der während der Einwirkzeit der energiereichen Strahlung aufrechterhalten bleibt.

Dabei kann die Abdeckschicht als Abdeckfolie ausgebildet sein und kann aus Kunststoff, aus Polyester, aus Polyethylenterephthalat (PET), aus Polypropylen (PP), Polyethylen (PE) oder dergleichen bestehen. Besteht die Abdeckschicht beispielsweise aus Polyethylen (PE), kann die Abdeckschicht - sofern der Oberflächenschichtverbund mit einer Platte bei einer Temperatur von bis zu 120°C verpresst wird - auf dem Oberflächenschichtverbund verbleiben. Bei höheren Presstemperaturen ist eine aus Polyethylen (PE) bestehende Abdeckschicht vor dem Verpressen zu entfernen.

Für eine farblich unverfälschte Betrachtung eines Dekors durch den Oberflächenschichtverbund bietet es sich an, wenn die Abdeckschicht unpigmentiert ist.

Für ein späteres Aufbringen des Oberflächenschichtverbunds auf eine Platte bietet es sich an, wenn auf die Zusatzschichtunterseite eine zumindest im endgültig klebenden Zustand transparente Klebeschicht aufgebracht ist. Die Klebeschicht kann beispielsweise selbstklebend sein. Nach Entfernen einer Schutzfolie kann der Oberflächenschichtverbund auf diese Weise auf eine Platte aufgebracht und - sofern erforderlich - hierbei noch auf die Platte gepresst werden. Die Klebeschicht kann aber beispielsweise auch so ausgebildet sein, dass sie in Gegenwart von Hitze oder von Luftsauerstoff aktiviert wird. Durch die zumindest im endgültig klebenden Zustand transparente Ausgestaltung der Klebeschicht ist ein auf einer Platte aufgebrachtes Dekor auch im aufgebrachten Zustand erkennbar. Vorzugsweise ist die Klebeschicht unpigmentiert. Das Dekor kann beispielsweise direkt auf die Platte aufgedruckt oder aufgemalt sein. Das Dekor kann aber auch Gegenstand einer separaten Dekorschicht sein, die auf die Platte aufgebracht ist.

Alternativ kann auf die Oberseite der Platte eine zumindest im endgültig klebenden Zustand transparente Klebeschicht aufgebracht sein, damit ein erfindungsgemäßer Oberflächenschichtverbund an der Platte haften kann. Bei einer solchen Ausgestaltung bedarf es keiner zumindest im endgültig klebenden Zustand transparenten Klebeschicht auf der Zusatzschichtunterseite der Zusatzschicht.

Vorteilhafterweise sind zumindest die Zusatzschicht und die Nutzschicht unpigmentiert. Damit ist ein Dekor ohne eine Farbveränderung durch den aufgebrachten Oberflächenschichtverbund erkennbar.

Die Erfindung betrifft auch ein Verfahren zum Herstellen eines Oberflächenschichtverbunds zum späteren Aufbringen auf eine Oberseite einer Platte, wobei der Oberflächenschichtverbund zum einen eine strahlengehärtete transparente Nutzschicht mit einer Nutzschichtoberseite und einer Nutzschichtunterseite und zum anderen eine Zusatzschicht mit einer Zusatzschichtoberseite und einer Zusatzschichtunterseite umfasst, die unterhalb der Nutzschicht vorgesehen ist, wobei die Zusatzschicht vollflächig mit der Nutzschichtunterseite verbunden ist und wobei die Nutzschicht aus einer strahlengehärteten strahlenhärtbaren Beschichtungsmasse besteht.

Platten mit strahlengehärteten Oberflächenschichtverbunden werden seit vielen Jahren in der Herstellung von dekorativen Schichtstoffplatten eingesetzt. Sie weisen eine hohe Druckqualität und Brillanz des Dekors, eine hohe Witterungsbeständigkeit, eine hohe Kratzbeständigkeit, eine hohe Chemikalienbeständigkeit und eine hohe Lichtechtheit auf. Es sind Oberflächenschichtverbunde zum späteren Aufbringen auf eine Oberseite einer Platte bekannt, wobei der Oberflächenschichtverbund zum einen eine strahlengehärtete und transparente Nutzschicht mit einer Nutzschichtoberseite und einer Nutzschichtunterseite und zum anderen eine Zusatzschicht mit einer Zusatzschichtoberseite und einer Zusatzschichtunterseite umfasst, die unterhalb der Nutzschicht vorgesehen ist, wobei die Zusatzschicht vollflächig mit der Nutzschichtunterseite verbunden ist und wobei es sich bei der Zusatzschicht um ein Papier mit einem Dekor handelt. Das Papier kann - sofern erwünscht - auch behandelt, d. h. harzgetränkt, sein. Dieser Oberflächenschichtverbundwird kann dann später auf eine Platte aufgebracht werden.

Strahlengehärtete Oberflächen sind fertige Produkte, die nicht mehr beispielsweise in einer Presse unter Druck und Temperatur sowie unter Einfluss weiterer Substanzen, wie Melamin- oder Phenolharzen, aushärten müssen. Daher haben sie den großen Vorteil, dass sie zeitlich fast unbegrenzt lagerfähig sind.

Die strahlengehärteten Oberflächenschichtverbunde werden als Rollenware oder als Blattware geliefert, wobei die gewünschten Eigenschaften festgelegt sind.

Traditionelle harzgetränkte Papiere verlieren jedoch ihre Eigenschaften nach ca. 6 - 9 Wochen und müssen dann entsorgt werden. Das führt zu hohen Verlusten und großen logistischen Anforderungen. Als nachteilig wird außerdem angesehen, dass - sofern wie beispielsweise bei der Herstellung von Paneelen - unterschiedliche Dekore erwünscht sind, der Hersteller Oberflächenschichtverbunde mit den unterschiedlichen Dekoren in Mindestmengen bevorraten muss. Sonderdekore sind nur mit einem hohem Aufwand zu realisieren.

Die Aufgabe der Erfindung besteht darin, die vorgenannten Nachteile zu beseitigen und ein Verfahren zum Herstellen eines Oberflächenschichtverbunds anzugeben, das die einfache Herstellung eines Oberflächenschichtverbunds erlaubt, der zum Aufbringen auf Platten unterschiedlicher Dekore geeignet ist.

Diese Aufgabe wird dadurch gelöst, dass eine transparente als Kunststofffolie ausgebildete Zusatzschicht mit einer zur Erhöhung ihrer Oberflächenenergie behandelten Zusatzschichtoberseite und/oder mit einer zur Erhöhung ihrer Oberflächenenergie behandelten Zusatzschichtunterseite derart verwendet wird, dass die Beschichtungsmasse auf die Zusatzschichtoberseite aufgetragen wird, dass anschließend auf die Beschichtungsmasse eine die Beschichtungsmasse vor der Einwirkung von Sauerstoff schützende, vorzugsweise transparente, Abdeckschicht aufgebracht wird und dass anschließend die Beschichtungsmasse unter Einwirkung von Strahlung ausgehärtet wird.

Das Verfahren kann diskontinuierlich oder kontinuierlich betrieben werden. Bei einem kontinuierlichen Verfahren wird der hergestellte Oberflächenschichtverbund beispielsweise auf eine Rolle aufgewickelt. Infolge des Aushärtens hat in der aus einer strahlengehärteten strahlenhärtbaren Beschichtungsmasse bestehenden Nutzschicht eine chemische Stoffumwandlung stattgefunden. Nach der Aushärtung ist die Nutzschicht hart. Gleichwohl ist der Oberflächenschichtverbund so flexibel, dass er beispielsweise aufgewickelt werden kann. In einem weiteren Produktionsschritt kann der Oberflächenschichtverbund dann in einer geeigneten Pressenanlage auf eine Platte aufgebracht werden.

Sollte die behandelte Zusatzschichtoberseite der Kunststofffolie zunächst noch eine wenig milchig oder trübe sein, verschwindet durch die Beschichtung mit der strahlenhärtbaren Beschichtungsmasse und durch die Aushärtung der Harze in der strahlenhärtbaren Beschichtungsmasse unter Einwirkung von Strahlung die Trübung der Kunststofffolie und die Kunststofffolie wird transparent.

Es bietet sich an, wenn eine transparente als Kunststofffolie ausgebildete Zusatzschicht mit einer zur Erhöhung ihrer Oberflächenenergie chemisch behandelten, vorzugsweise geätzten, Zusatzschichtoberseite und/oder mit einer zur Erhöhung ihrer Oberflächenenergie chemisch behandelten, vorzugsweise geätzten, Zusatzschichtunterseite verwendet wird. Zur Ätzung kann beispielsweise Trichloracetat verwendet werden.

Die Kunststofffolie kann als Polyesterfolie, als Polyethylenterephthalat-Folie (PET), als Polypropylen-Folie (PP), als Polyethylen-Folie (PE) oder der gleichen, ausgebildet sein.

Die, vorzugsweise transparente, Abdeckschicht kann nach dem Aushärten entfernt werden. Sofern die Abdeckschicht nach dem Aushärten nicht abgezogen wird sondern auf der Nutzschichtoberseite verbleibt, ist die Abdeckschicht transparent, damit nach dem Aufbringen auf eine Platte ein Dekor durch den aufgebrachten Oberflächenschichtverbund erkennbar ist.

Durch die Abdeckschicht kann der Glanzgrad und/oder die Struktur der Nutzschichtoberseite der ausgehärteten Nutzschicht beeinflussbar sein. Auch kann auf diese Weise die Haptik der Nutzschichtoberseite beeinflusst werden.

Ferner bietet es sich an, wenn auf die Zusatzschichtunterseite eine, zumindest im endgültig klebenden Zustand transparente, Klebeschicht aufgebracht wird. Mittels dieser Klebeschicht kann der Oberflächenschichtverbund dauerhaft an einer Platte haften. Bei Behandlung der Zusatzschichtunterseite ist eine gute und dauerhafte Verbindung zu der Klebeschicht, d. h. zu den Klebharzen, wie Melamin oder Phenolharzen, sowie zu der obersten Papierlage einer Platte, auf die der Oberflächenschichtverbund später aufgebracht wird, gewährleistet, so dass eine qualitativ hochwertige dekorative Platte hergestellt werden kann.

Die Klebeschicht kann vor oder nach dem Einwirken der Strahlung auf die Zusatzschichtunterseite aufgebracht werden.

Die Erfindung betrifft auch ein Verfahren zur Herstellung einer mit einem Dekor und/oder einer Werbung versehenen Platte, in dem eine Platte mit einem Dekor und/oder einer Werbung versehen wird und in dem anschließend ein Oberflächenschichtverbund nach einem der Ansprüche 1 bis 8, vorzugsweise durch Pressen, aufgebracht wird.

Sollte in dem fertigen Oberflächenschichtverbund die behandelte Zusatzschichtunterseite der Kunststofffolie noch ein wenig milchig oder trübe sein, wird diese durch das spätere Verpressen des fertigen Oberflächenschichtverbundes auf eine Platte und durch den innigen Kontakt der Zusatzschichtunterseite beispielsweise mit fließfähigen Melamin- oder Phenolharzen der Klebeschicht ebenfalls transparent, so dass eine klare, transparente Oberfläche entsteht, die das darunterliegende Dekor voll zur Geltung kommen lässt und es gleichzeitig vor schädlichen Einflüssen schützt.

Bei dem Dekor oder der Werbung kann es sich beispielsweise um eine Papierschicht, vorzugsweise um eine harzgetränkte Papierschicht, handeln, die in einem separaten Schritt, beispielsweise durch Pressen, auf eine Platte aufgebracht worden ist. Auf dieses aufgebrachte Dekor kann dann der separat davon zuvor hergestellte erfindungsgemäße Oberflächenschichtverbund, vorzugsweise durch Pressen, aufgebracht werden.

Das Aufbringen des erfindungsgemäßen Oberflächenschichtverbunds auf die Platte oder das Dekor der Platte kann beispielsweise durch Pressen, beispielsweise mittels einer Hochdruck- oder Niederdruckpresse bei einer Temperatur von 80°C bis 120°C, erfolgen. Auch ein Aufkaschieren beispielsweise mittels eines Harnstoff-Formaldehyds oder eines Schmelzklebers oder ein Aufkleben mittels eines Kontaktklebers ist möglich. Unter einem Kontaktkleber wird ein Kleber verstanden, dessen endgültige Klebewirkung dann eintritt, wenn - nachdem die mit dem Kontaktkleber bestrichenen Flächen zusammengebracht worden sind - das in dem Kontaktkleber enthaltene Lösungsmittel verdunstet ist.

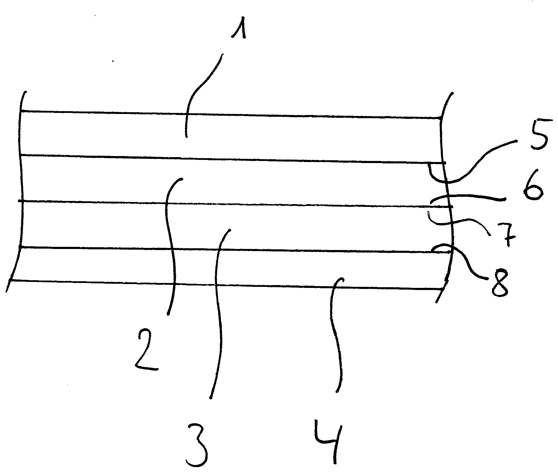

Im Folgenden wird ein in der Zeichnung dargestelltes Ausführungsbeispiel der Erfindung erläutert. Die einzige Figur zeigt einen Schnitt durch einen erfindungsgemäßen transparenten Oberflächenschichtverbund.

Die einzige Figur zeigt einen erfindungsgemäßen Oberflächenschichtverbund, der von oben nach unten betrachtet eine transparente Abdeckschicht 1, eine transparente Nutzschicht 2, eine transparente Zusatzschicht 3 und eine unterseitige, zumindest im endgültig klebenden Zustand transparente Klebeschicht 4 umfasst. Die Nutzschicht 2 besteht aus einer strahlengehärteten strahlenhärtbaren Beschichtungsmasse und weist eine Nutzschichtoberseite 5 und eine Nutzschichtunterseite 6 auf.

Die Zusatzschicht 3 ist vollflächig mit der Nutzschichtunterseite 6 der Nutzschicht 2 verbunden und weist eine Zusatzschichtoberseite 7 und eine Zusatzschichtunterseite 8 auf. Die Zusatzschicht 3 ist als Polyesterfolie ausgebildet und ebenfalls transparent, wobei die Oberfläche der Zusatzschichtoberseite 7 der als Polyesterfolie ausgebildeten Zusatzschicht 3 und die Oberfläche der Zusatzschichtunterseite 8 der als Polyesterfolie ausgebildeten Zusatzschicht 3 zur Erhöhung ihrer Oberflächenenergie vor dem Miteinanderverbinden mit der darüber befindlichen Nutzschicht 2 und der darunter befindlichen Klebeschicht 4 behandelt sind. So ist die Oberfläche der Zusatzschichtoberseite 7 und die Oberfläche der Zusatzschichtunterseite 8 zur Erhöhung ihrer Oberflächenenergie beispielsweise chemisch durch Ätzen behandelt.

Zumindest während der Strahlenhärtung ist die Nutzschichtoberseite 5 durch die vor der Einwirkung von Sauerstoff schützenden Abdeckschicht 1 abgedeckt. Die Abdeckschicht 1 ist beispielsweise aus Kunststoff. Sofern gewünscht, kann die Abdeckschicht 1 nach der Strahlenhärtung wieder entfernt werden.

Auf der Zusatzschichtunterseite 8 ist die Klebeschicht 4 aufgebracht. Mittels dieser Klebeschicht 4 kann der Oberflächenschichtverbund auf eine nicht dargestellte Platte, die beispielsweise auf ihrer Oberseite ein Dekor aufweisen kann, beispielsweise durch Pressen, aufgebracht werden. Die Klebeschicht 4 kann beispielsweise einen Schmelzkleber umfassen, der beim Pressen erwärmt wird und nach dem Abkühlen seine Klebewirkung entfaltet.

Damit ist der erfindungsgemäße Oberflächenschichtverbund einschließlich der Klebeschicht 4 insgesamt transparent, so dass das Dekor einer Platte, auf die der Oberflächenschichtverbund aufgebracht ist, auch im aufgebrachten Zustand abhängig von Transparenzgrad hindurch scheint oder sogar deutlich erkennbar ist.

Sofern alle Schichten des Oberflächenschichtverbunds unpigmentiert, d. h. nicht gefärbt, sind, ist das Dekor ohne eine Verfärbung durch den aufgebrachten Oberflächenschichtverbund erkennbar. Bei dem Dekor kann es sich beispielsweise um ein Muster, eine Werbung, die Bild- und Textbestandteile aufweist, handeln.

Nachfolgend werden vier Beispiele beschrieben. Bei der in den Beispielen erwähnten Abdeckschicht 1 handelt es sich um eine Abdeckfolie.

### 1. Beispiel

Die Zusatzschicht 3 wird auf ihrer Zusatzschichtoberseite 7 mit 70 - 120 g/m² Auftragsgewicht einer außenbewitterungsfähigen, elektronenstrahlhärtbaren Beschichtungsmasse, bestehend aus 2 Teilen aliphatischem Polyester - Präpolymer und 3 Teilen aliphatischem, difunktionellen Polyestermonomer, beschichtet. Die Beschichtungsmasse wird anschließend mit einer matten, stark strukturierten Abdeckschicht 1 abgedeckt. Die Zusatzschicht 3, die Nutzschicht 2 und die Abdeckschicht 1 werden dann mittels Elektronenstrahlen mit einer Beschleunigungsspannung von 220 - 270 kV und mit einer Dosis von 15 - 90 KGy, bevorzugt mit 30 - 70 KGy, ausgehärtet. Dieser Oberflächenschichtverbund wird mit einer geeigneten Apparatur zu einer Rolle aufgewickelt.

Später kann beispielsweise auf einen Stapel an Natronkraftpapieren, die mit Phenolharz getränkt sind und deren Anzahl von der gewünschten Stärke der herzustellenden Platte abhängt, ein mit Melaminharz getränktes Dekorpapier aufgelegt werden. Auf dieses Dekorpapier wird dann der Oberflächenschichtverbund als oberste Lage aufgelegt und der so gebildete Stapel in einer Hochdruckpresse bei einer Temperatur von 120 - 190°C und einem Druck von 50 - 100 bar, zu einer Hochdruck-Schichtstoffplatte (High Pressure Laminates) verpresst.

### 2. Beispiel

Die Zusatzschicht 3 wird auf ihrer Zusatzschichtoberseite 7 mit 30 - 70 g/m² Auftragsgewicht einer flexiblen, elektronenstrahlhärtbaren Beschichtungsmasse, bestehend aus 2 Teilen aliphatischem Polyester -Präpolymer und 3 Teilen aliphatischem, monofunktionellen Polyestermonomer, beschichtet. Die elektronenstrahlhärtbare Beschichtungsmasse wird mit einer hochglänzenden, glatten Abdeckschicht 1 abgedeckt. Die Zusatzschicht 3, die Nutzschicht 2 und die Abdeckschicht 1 werden mittels Elektronenstrahlen mit einer Beschleunigungsspannung von 200 - 250 kV und einer Dosis von 15 - 90 KGy, bevorzugt mit 30 - 70 KGy ausgehärtet. Dieser Oberflächenschichtverbund wird mit einer geeigneten Apparatur zu einer Rolle aufgewickelt.

In einer kontinuierlich arbeitenden Pressenanlage werden mehrere, mit Phenolharz getränkte Natronkraftpapiere, ein melaminharzgetränktes Dekorpapier und als oberste Lage der Oberflächenschichtverbund durch eine Pressenanlage bei einer Temperatur von 120 - 170°C und einem Druck von 30 - 70 bar zu einer CPL - Schichtstoffplatte (Continuous Pressed Laminates) verpresst.

### 3. Beispiel

Die Zusatzschicht 3 wird auf ihrer Zusatzschichtoberseite 7 mit 20 - 40 g/m² Auftragsgewicht einer flexiblen, UV-härtbaren Beschichtungsmasse, bestehend aus 2 Teilen aliphatischem Polyester -Präpolymer und 3 Teilen aliphatischem, monofunktionellen Polyestermonomer sowie einem Zusatz von 1 - 3 % Fotoinitiator, beschichtet. Die UV-härtbare Beschichtungsmasse wird mit einer dünnen, UV-durchlässigen, glänzenden und glatten Abdeckschicht 1 abgedeckt. Die Zusatzschicht 3, die Nutzschicht 2 und die Abdeckschicht 1 werden mittels 2 UV-Lampen á 160Watt/cm ausgehärtet. Dieser Oberflächenschichtverbund wird mit einer geeigneten Apparatur zu einer Rolle aufgewickelt.

In einer diskontinuierlich arbeitenden Taktpresse werden mehrere mit Melaminharz getränkte Papiere auf eine Trägerplatte aus einem Holzwerkstoff, wie Spanplatte oder MDF-Platte, gelegt. Ein Dekorpapier und als oberste Lage der Oberflächenschichtverbund werden anschließend in der Taktpresse bei einer Temperatur von 120 - 170°C und einem Druck von 30 - 70 bar zu einer Laminatplatte verpresst.

### 4. Beispiel

Die Zusatzschicht 3 wird auf ihrer Zusatzschichtoberseite 7 mit 10 - 40 g/m² Auftragsgewicht einer flexiblen, UV-härtbaren Beschichtungsmasse, bestehend aus 2 Teilen aliphatischen Polyester -Präpolymer und 3 Teilen aliphatischem, monofunktionellen Polyestermonomer sowie einem Zusatz von 1 - 3 % Fotoinitiator, beschichtet. Die UV-härtbare Beschichtungsmasse wird mit einer dünnen, UV-durchlässigen, glänzenden und glatten Abdeckschicht 1 abgedeckt. Die Zusatzschicht 3, die Nutzschicht 2 und die Abdeckschicht 1 werden mittels 2 UV-Lampen á 160Watt/cm ausgehärtet. Dieser Oberflächenschichtverbund wird mit einer geeigneten Apparatur zu einer Rolle aufgewickelt.

In einer kontinuierlich arbeitenden Kaschieranlage werden mehrere, mit Melaminharz getränkte Papiere, auf eine Trägerplatte aus einem Holzwerkstoff, wie Spanplatte oder MDF-Platte, gelegt. Ein Dekorpapier und als oberste Lage der Oberflächenschichtverbund werden in der Kaschieranlage bei einer Temperatur von 120 - 170°C und einem Druck von 10 - 40 bar zu einer Laminatplatte verpresst.

## Patentansprüche

1. Oberflächenschichtverbund zum späteren Aufbringen auf eine Oberseite einer Platte, wobei der Oberflächenschichtverbund zum einen eine strahlengehärtete und transparente Nutzschicht (2) mit einer Nutzschichtoberseite (5) und einer Nutzschichtunterseite (6) und zum anderen eine Zusatzschicht (3) mit einer Zusatzschichtoberseite (7) und einer Zusatzschichtunterseite (8) umfasst, die unterhalb der Nutzschicht (2) vorgesehen ist, wobei die Zusatzschicht (3) vollflächig mit der Nutzschichtunterseite (6) verbunden ist, **dadurch gekennzeichnet, dass** die Zusatzschicht (3) als transparente Kunststofffolie ausgebildet ist und wobei die Oberfläche der Zusatzschichtoberseite (7) und/oder die Oberfläche der Zusatzschichtunterseite (8) zur Erhöhung ihrer Oberflächenenergie vor dem Miteinanderverbinden mit der Nutzschicht (2) behandelt ist(sind).

2. Oberflächenschichtverbund nach dem vorhergehenden Anspruch, **dadurch gekennzeichnet, dass** die Oberfläche der Zusatzschichtoberseite (7) und/oder die Oberfläche der Zusatzschichtunterseite (8) zur Erhöhung ihrer Oberflächenenergie vor dem Miteinanderverbinden mit der Nutzschicht (2) chemisch behandelt, vorzugsweise geätzt, ist(sind).

3. Oberflächenschichtverbund nach einem der vorhergehenden Ansprüche, **dadurch gekennzeichnet, dass** die Kunststofffolie als Polyesterfolie, als Polyethylenterephthalat-Folie (PET), als Polypropylen-Folie (PP), als Polyethylen-Folie (PE) oder der gleichen, ausgebildet ist.

4. Oberflächenschichtverbund nach einem der vorhergehenden Ansprüche, **dadurch gekennzeichnet, dass** die Nutzschichtoberseite (5) mit einer die Nutzschicht (2) zumindest während der Strahlenhärtung vor der Einwirkung von Sauerstoff schützenden, vorzugsweise transparenten, Abdeckschicht (1) abgedeckt ist.

5. Oberflächenschichtverbund nach dem vorhergehenden Anspruch, **dadurch gekennzeichnet, dass** die Abdeckschicht (1) aus Kunststoff, aus Polyester, aus Polyethylenterephthalat (PET), aus Polypropylen (PP), Polyethylen (PE) oder dergleichen besteht.

6. Oberflächenschichtverbund nach einem der vorhergehenden Ansprüche, **dadurch gekennzeichnet, dass** die Abdeckschicht (1) unpigmentiert ist.

7. Oberflächenschichtverbund nach einem der vorhergehenden Ansprüche, **dadurch gekennzeichnet, dass** auf die Zusatzschichtunterseite (8) eine zumindest im endgültig klebenden Zustand transparente Klebeschicht (4) aufgebracht ist.

8. Oberflächenschichtverbund nach einem der vorhergehenden Ansprüche, **dadurch gekennzeichnet, dass** zumindest die Zusatzschicht (3) und die Nutzschicht (2) unpigmentiert sind.

9. Verfahren zum Herstellen eines Oberflächenschichtverbunds zum späteren Aufbringen auf eine Oberseite einer Platte, wobei der Oberflächenschichtverbund zum einen eine strahlengehärtete transparente Nutzschicht (2) mit einer Nutzschichtoberseite (5) und einer Nutzschichtunterseite (6) und zum anderen eine Zusatzschicht (3) mit einer Zusatzschichtoberseite (7) und einer Zusatzschichtunterseite (8) umfasst, die unterhalb der Nutzschicht (2) vorgesehen ist, wobei die Zusatzschicht (3) vollflächig mit der Nutzschichtunterseite (6) verbunden ist und wobei die Nutzschicht (2) aus einer strahlengehärteten strahlenhärtbaren Beschichtungsmasse besteht, vorzugsweise zum Herstellen eines Oberflächenschichtverbunds nach einem der vorhergehenden Ansprüche, **dadurch gekennzeichnet, dass** die als transparente Kunststofffolie ausgebildete Zusatzschicht (3) mit einer zur Erhöhung ihrer Oberflächenenergie behandelten Zusatzschichtoberseite (7) und/oder mit einer zur Erhöhung ihrer Oberflächenenergie behandelten Zusatzschichtunterseite (8) derart verwendet wird, dass die Beschichtungsmasse auf die Zusatzschichtoberseite (7) aufgetragen wird, dass anschließend auf die Beschichtungsmasse eine die Beschichtungsmasse vor der Einwirkung von Sauerstoff schützende, vorzugsweise transparente, Abdeckschicht (1) aufgebracht wird und dass anschließend die Beschichtungsmasse unter Einwirkung von Strahlung ausgehärtet wird.

10. Verfahren nach dem vorhergehenden Anspruch, **dadurch gekennzeichnet, dass** eine transparente als Kunststofffolie ausgebildete Zusatzschicht (3) mit einer zur Erhöhung ihrer Oberflächenenergie chemisch behandelten, vorzugsweise geätzten, Zusatzschichtoberseite (7) und/oder mit einer zur Erhöhung ihrer Oberflächenenergie chemisch behandelten, vorzugsweise geätzten, Zusatzschichtunterseite (8) verwendet wird.

11. Verfahren nach einem der Ansprüche 9 oder 10, **dadurch gekennzeichnet, dass** die, vorzugsweise transparente, Abdeckschicht (1) nach dem Aushärten entfernt wird.

12. Verfahren nach einem der Ansprüche 9 bis 11, **dadurch gekennzeichnet, dass** durch die Abdeckschicht (1) der Glanzgrad und/oder die Struktur der Nutzschichtoberseite (5) der ausgehärteten Nutzschicht (2) beeinflussbar ist.

13. Verfahren nach einem der Ansprüche 9 bis 12, **dadurch gekennzeichnet, dass** auf die Zusatzschichtunterseite (8) eine, zumindest im endgültig klebenden Zustand transparente, Klebeschicht (4) aufgebracht wird.

14. Verfahren nach dem vorhergehenden Anspruch, **dadurch gekennzeichnet, dass** die Klebeschicht (4) vor oder nach dem Einwirken der Strahlung auf die Zusatzschichtunterseite (8) aufgebracht wird.

15. Verfahren zur Herstellung einer mit einem Dekor und/oder einer Werbung versehenen Platte, **dadurch gekennzeichnet, dass** eine Platte mit einem Dekor und/oder einer Werbung versehen wird und anschließend ein Oberflächenschichtverbund nach einem der Ansprüche 1 bis 8, vorzugsweise durch Pressen, aufgebracht wird.

## Claims

1. Surface layer composite for later application onto an upper side of a plate, wherein the surface layer composite comprises, as one element, a radiation-hardened and transparent usage layer (2) with a usage layer upper side (5) and a usage layer lower side (6) and, as another element, an additional layer (3) with an additional layer upper side (7) and an additional layer lower side (8), which is provided beneath the usage layer (2), wherein the additional layer (3) is connected full-surface to the usage layer lower side (6), **characterised in that** the additional layer (3) is configured as a transparent plastic film, and wherein the surface of the additional layer upper side (7) and/or the surface of the additional layer under side (8) is/are treated in order to increase their surface energy before the joining connection with the usage layer (2).

2. Surface layer composite according to the preceding claim, **characterised in that** the surface of the additional layer upper side (7) and/or the surface of the additional layer under side (8) is/are chemically treated, preferably etched, in order to increase their surface energy before the joining connection with the usage layer (2).

3. Surface layer composite according to any one of the preceding claim, **characterised in that** the plastic film is configured as a polyester film, as a polyethylene terephthalate film (PET), as a polypropylene film (PP), as a polyethylene film (PE), or the like.

4. Surface layer composite according to any one of the preceding claim, **characterised in that** the usage layer upper side (5) is covered by a preferably transparent cover layer (1), which at least during the radiation hardening protects the usage layer (2) against the effect of oxygen.

5. Surface layer composite according to any one of the preceding claim, **characterised in that** the cover layer (1) consists of plastic, polyester, polyethylene terephthalate (PET), polypropylene (PP), polyethylene (PE), or the like.

6. Surface layer composite according to any one of the preceding claim, **characterised in that** the cover layer (1) is unpigmented.

7. Surface layer composite according to any one of the preceding claim, **characterised in that** applied onto the additional layer under side (8) is an adhesive layer (4) which, at least in the final adhesive state, is transparent.

8. Surface layer composite according to any one of the preceding claim, **characterised in that** at least the additional layer (3) and the usage layer (2) are unpigmented.

9. Method for producing a surface layer composite for later application onto an upper side of a plate, wherein the surface layer composite comprises, on the one hand, a radiation-hardened and transparent usage layer (2) with a usage layer upper side (5) and a usage layer lower side (6) and, on the other, an additional layer (3) with an additional layer upper side (7) and an additional layer lower side (8), which is provided beneath the usage layer (2), wherein the additional layer (3) is connected full-surface to the usage layer lower side (6), and wherein the usage layer (2) consists of a radiation-hardened/radiation hardenable coating compound, preferably for producing a surface layer composite according to any one of the preceding claim, **characterised in that** the additional layer (3), configured as a transparent plastic film, with an additional layer upper side (7), treated in order to increase its surface energy, and/or with an additional layer under side (8), treated in order to increase its surface energy, is used in such a way that the coating compound is applied onto the additional layer upper side (7), that then a preferably transparent cover layer (1) is applied onto the coating compound in order to protect it against the effect of oxygen, and that finally the coating compound is hardened under the effect of radiation.

10. Method according to the preceding claim, **characterised in that** a transparent additional layer (3), configured as a plastic film, is used with an additional layer upper side (7), chemically treated, preferably etched, in order to increase its surface energy, and/or with an additional layer under side (8), chemically treated, preferably etched, in order to increase its surface energy.

11. Method according to any one of claim 9 or 10, **characterised in that** the preferably transparent cover layer (1) is removed after the hardening.

12. Method according to any one of claims 9 or 11, **characterised in that** the degree of gloss and/or the structure of the usage layer upper side (5) of the hardened usage layer (2) can be influenced by the cover layer (1).

13. Method according to any one of claims 9 to 12, **characterised in that** an adhesive layer (4), which is transparent at least in the final adhesive state, is applied onto the additional layer under side (8).

14. Method according to the preceding claim, **characterised in that** the adhesive layer (4) is applied onto the additional layer under side (8) before or after the radiation has taken effect.

15. Method for producing a plate provided with a decorative panel and/or an advertisement, **characterised in that** a plate is provided with a decorative panel and/or an advertisement, and then a surface layer composite according to any one of claims 1 to 8 is applied, preferably by pressing.

## Revendications

1. Composite de couche de surface destiné à être appliqué ultérieurement sur une face supérieure d'un panneau, le composite de couche de surface comprenant, d'une part, une couche d'usure (2) transparente et durcie par rayonnement présentant une face supérieure de couche d'usure (5) et une face inférieure de couche d'usure (6) et, d'autre part, une couche supplémentaire (3) présentant une face supérieure de couche supplémentaire (7) et une face inférieure de couche supplémentaire (8) et qui est prévue sous la couche d'usure (2), la couche supplémentaire (3) étant reliée sur toute sa surface à la face inférieure de couche d'usure (6), **caractérisé en ce que** la couche supplémentaire (3) est réalisée sous la forme d'un film plastique transparent, la surface de la face supérieure de couche supplémentaire (7) et/ou la surface de la face inférieure de couche supplémentaire (8) étant traitée(s) pour augmenter son/leur énergie de surface avant la liaison avec la couche d'usure (2).

2. Composite de couche de surface selon la revendication précédente, **caractérisé en ce que** la surface de la face supérieure de couche supplémentaire (7) et/ou la surface de la face inférieure de couche supplémentaire (8) est/sont traitée(s) chimiquement, de préférence attaquée(s), pour augmenter son/leur énergie de surface avant la liaison avec la couche d'usure (2).

3. Composite de couche de surface selon l'une des revendications précédentes, **caractérisé en ce que** le film plastique est réalisé sous la forme d'un film en polyester, d'un film en polyéthylène téréphtalate (PET), d'un film en polypropylène (PP), d'un film en polyéthylène (PE) ou analogue.

4. Composite de couche de surface selon l'une des revendications précédentes, **caractérisé en ce que** la face supérieure de couche d'usure (5) est recouverte d'une couche de recouvrement (1), de préférence transparente, qui protège la couche d'usure (2) de l'action de l'oxygène au moins pendant le durcissement par rayonnement.

5. Composite de couche de surface selon la revendication précédente, **caractérisé en ce que** la couche de recouvrement (1) est constituée de matière plastique, de polyester, de polyéthylène téréphtalate (PET), de polypropylène (PP), de polyéthylène (PE) ou analogue.

6. Composite de couche de surface selon l'une des revendications précédentes, **caractérisé en ce que** la couche de recouvrement (1) est non pigmentée.

7. Composite de couche de surface selon l'une des revendications précédentes, **caractérisé en ce qu'**une couche adhésive (4), transparente au moins à l'état adhésif final, est appliquée sur la face inférieure de couche supplémentaire (8).

8. Composite de couche de surface selon l'une des revendications précédentes, **caractérisé en ce qu'**au moins la couche supplémentaire (3) et la couche d'usure (2) sont non pigmentées.

9. Procédé de fabrication d'un composite de couche de surface destiné à être appliqué ultérieurement sur une face supérieure d'un panneau, le composite de couche de surface comprenant, d'une part, une couche d'usure (2) transparente et durcie par rayonnement présentant une face supérieure de couche d'usure (5) et une face inférieure de couche d'usure (6) et, d'autre part, une couche supplémentaire (3) présentant une face supérieure de couche supplémentaire (7) et une face inférieure de couche supplémentaire (8) et qui est prévue sous la couche d'usure (2), la couche supplémentaire (3) étant reliée sur toute sa surface à la face inférieure de couche d'usure (6) et la couche d'usure (2) étant constituée d'une composition de revêtement durcissable par rayonnement durcie par rayonnement, de préférence pour produire un composite de couche de surface selon l'une des revendications précédentes, **caractérisé en ce que** la couche supplémentaire (3) réalisée sous la forme d'un film plastique transparent est utilisée avec une face supérieure de couche supplémentaire (7) traitée pour augmenter son énergie de surface et/ou avec une face inférieure de couche supplémentaire (8) traitée pour augmenter son énergie de surface de telle sorte que la composition de revêtement est appliquée sur la face supérieure de couche supplémentaire (7), qu'ensuite une couche de recouvrement (1), de préférence transparente, protégeant la composition de revêtement de l'action de l'oxygène est appliquée sur la composition de revêtement et qu'ensuite la composition de revêtement est durcie par l'action d'un rayonnement.

10. Procédé selon la revendication précédente, **caractérisé en ce qu'**une couche supplémentaire transparente (3) réalisée sous la forme d'un film plastique est utilisée avec une face supérieure de couche supplémentaire (7) traitée chimiquement, de préférence attaquée, pour augmenter son énergie de surface et/ou avec une face inférieure de couche supplémentaire (8) traitée chimiquement, de préférence attaquée, pour augmenter son énergie de surface.

11. Procédé selon l'une des revendications 9 ou 10, **caractérisé en ce que** la couche de recouvrement (1), de préférence transparente, est éliminée après le durcissement.

12. Procédé selon l'une des revendications 9 à 11, **caractérisé en ce que** le degré de brillance et/ou la structure de la surface supérieure de couche d'usure (5) de la couche d'usure (2) durcie peut/peuvent être influencée(s) par la couche de revêtement (1).

13. Procédé selon l'une des revendications 9 à 12, **caractérisé en ce qu'**une couche adhésive (4), transparente au moins à l'état adhésif final, est appliquée sur la face inférieure de couche supplémentaire (8).

14. Procédé selon la revendication précédente, **caractérisé en ce que** la couche adhésive (4) est appliquée sur la face inférieure de couche supplémentaire (8) avant ou après l'action du rayonnement.

15. Procédé de fabrication d'un panneau pourvu d'un décor et/ou d'une publicité, **caractérisé en ce qu'**un panneau est pourvu d'un décor et/ou d'une publicité et qu'ensuite un composite de couche de surface selon l'une des revendications 1 à 8 est appliqué, de préférence par pression.
